# EUROPEAN PATENT APPLICATION

(11) **EP 3 498 380 A1**
(43) Date of publication of application: **19.06.2019**
(21) Application number: 18169870.5
(22) Date of filing: 27.04.2018
(51) Int. Cl.: B05B 1/02, B23Q 11/10

(54) **NOZZLE, NOZZLE MODULE, AND MACHINE TOOLS PROVIDED WITH THEM**

(30) Priority: 12.12.2017 JP 2017237801
(71) Applicant: Sio Co., Ltd., Hachioji-shi, Tokyo 193-0822 (JP)
(72) Inventor: Komazawa, Masuhiko, Tokyo, 192-0152 (JP)
(74) Representative: Gulde & Partner

(57) **Abstract**

An embodiment of the present invention provides a nozzle (10, 303, 803) capable of discharging a fluid such as coolant around a predetermined area including a contact portion between a tool and a workpiece to concentrate the fluid on a target position or in a target direction. The nozzle (10, 303, 803) includes an inlet (10-a) through which a fluid is supplied, an outlet (10-b) through which the fluid is discharged, and an interior space connecting the inlet and the outlet. A plate-shaped member (11, 111) having a cross section of a predetermined shape is disposed in the interior space to form a flow path of the fluid.

## Description

### CROSS-REFERENCE TO RELATED APPLICATIONS

This application is based upon and claims the benefit of priority under 35 USC 119 of Japanese Patent Application No. 2017-237801 filed on December 12, 2017, the entire disclosure of which is incorporated herein by reference in its entirety for all purposes.

### BACKGROUND OF THE INVENTION

### 1. Field of the Invention

The present invention relates to a nozzle and a nozzle module for supplying a fluid, and machine tools provided with them. More specifically, the present invention relates to a nozzle which discharges coolant such as water or oil. The nozzle of the present invention is applicable to various machine tools such as a grinding machine, a drilling machine, a cutting machine, or a machining center.

### 2. Description of the Related Art

Conventionally, when a workpiece made of a metal or the like is machined into a desired shape by a machine tool such as the grinding machine or the drilling machine, coolant is supplied to a predetermined area including a contact portion between the workpiece and a tool such as a blade to cool heat generated during machining or remove debris of the workpiece (also referred to as chips) from a machining spot. Cutting heat caused by high pressure and frictional resistance at the contact portion between the workpiece and the blade abrades the edge of the blade and lowers the strength of the blade, thereby reducing tool life of the blade. In addition, if the chips of the workpiece are not sufficiently removed, they can stick to the edge of the blade during machining, which may degrade machining accuracy.

The coolant decreases the frictional resistance between the tool and the workpiece, removes the cutting heat, and performs cleaning to remove the chips cut off from a surface of the workpiece. Therefore, for the machine tool, it is important to discharge the coolant to the contact portion between the tool and the workpiece and the periphery thereof accurately and efficiently.

For example, Japanese Utility Model Application Laid-Open Publication No. 1985-175981 published on November 21, 1985, discloses a conduit for supplying coolant or the like and a nozzle connected to the end of the conduit. It is possible to obtain a desired length of the conduit by connecting a plurality of pairs of female and male units in spherical contraposition to each other. The nozzle may have a female part forming spherical contraposition with a male part of the conduit on the inlet side and be formed in the shape of a truncated cone on the outlet side. Otherwise, the nozzle may have a thickness dimension gradually decreasing and a width dimension gradually increasing toward the outlet.

In the case of using the conduit and the nozzle as a coolant supply means for the machine tool, a cooling efficiency is not good because a discharge direction of the coolant from the nozzle tip is not determined with a high accuracy and sometimes the coolant is not concentrated on the machining spot.

According to the conventional technology as described above, the coolant cannot be discharged or sprayed in a sufficiently appropriate position or direction. In addition, in the case that the type of the machine tool, the shape or size of the tool such as a grinding blade, or the shape or size of the workpiece changes, there exists a problem that it is difficult to discharge the coolant to a predetermined area including the contact portion between the tool and the workpiece accurately and efficiently.

### SUMMARY OF THE INVENTION

The present invention was made in light of the problems mentioned above. An object of the present invention is to provide a nozzle capable of improving the straightness of a fluid, for example, the coolant, discharged or sprayed from its outlet and concentrating the fluid on a target position or in a target direction.

In order to achieve the above object, an aspect of the present invention provides a nozzle including an inlet through which a fluid is supplied, an outlet through which the fluid is discharged, and an interior space connecting the inlet and the outlet. A plate-shaped member having a cross section of a predetermined shape is disposed in the interior space to form a flow path of the fluid.

Another aspect of the present invention provides a nozzle module including a hollow body to which a fluid is supplied, and a fluid discharge part for discharging the fluid to the outside, the fluid discharge part being connected to the body. One or a plurality of nozzles are formed in the fluid discharge part, and each of the one or the plurality of nozzles includes an inlet through which a fluid is supplied, an outlet through which the fluid is discharged, and an interior space connecting the inlet and the outlet. A plate-shaped member having a cross section of a predetermined shape is disposed in the interior space of the nozzle to form a flow path of the fluid.

According to many embodiments of the present invention, a plate-shaped member having a predetermined cross section is disposed in the interior space of the nozzle to form a flow path of a fluid such as coolant or a machining fluid, thereby increasing straightness of the fluid and capable of discharging the fluid at a target position or direction. Therefore, the fluid such as the coolant can be discharged to a target accurately and efficiently. Thus, diffusion (dispersion or turbulence) out of the target position can be prevented. The plate-shaped member causes a flow of the fluid in the interior space of the nozzle to be laminar or rectified. In addition, according to many embodiments of the present invention, the plate-shaped member having a plurality of folds parallel to the flow of the fluid is disposed in the interior space of the nozzle. Since the plate-shaped member is press-fitted to the wall surface of the interior space of the nozzle by its own elastic force, disposition and assembly of the plate-shaped member can be easily performed.

According to some embodiments of the present invention, the plate-shaped member forms an inner flow path surrounded by the plate-shaped member and outer flow paths formed in the outer side of the plate-shaped member and between the wall surface of the interior space of the nozzle and the plate-shaped member. Only the thickness of the plate-shaped member inhibits the flow of the fluid, and there is little loss of the flow rate. Further, it is possible to discharge the fluid at the target position or a predetermined angle in the form ensuring a sufficient flow rate of the fluid from the inner flow path. Since the fluid discharged from the outer flow paths also has straightness, it contributes to the cooling of the workpiece and helps to remove sludge (i.e. debris from the machining) and chips in the case that the nozzle of the present invention is applied to the machine tool.

In addition, according to some embodiments of the present invention, one or more nozzles are formed in a nozzle module and the plate-shaped member having a predetermined cross section is disposed in the interior space of one or more nozzles to form one or more flow paths of the fluid. This increases straightness of the fluid and the fluid such as the coolant can be discharged from the outlet of each nozzle at a target position or angle accurately and efficiently. Since the plate-shaped member is press-fitted to the wall surface of the interior space of the nozzle by its own elastic force, disposition and assembly of the plate-shaped member can be easily performed.

### BRIEF DESCRIPTION OF THE DRAWINGS

The above and further objects and novel features of the present invention will more fully appear from the following detailed description when the same is read in conjunction with the accompanying drawings. It is to be expressly understood, however, that the drawings are for the purpose of illustration only and are not intended to limit the scope of the invention.

Here:
Fig. 1 shows an example of a machine tool including a nozzle according to an embodiment of the present invention.
Fig. 2 shows a nozzle connected to a coolant hose according to a first embodiment of the present invention.
Fig. 3 shows a nozzle provided with a plate-shaped member having a cross section in the form of a four-petaled flower.
Fig. 4 shows an operation of installing the plate-shaped member having the cross section in the form of the four-petaled flower in the nozzle.
Fig. 5 is a cross-sectional view of the nozzle with the plate-shaped member having the cross section in the form of the four-petaled flower disposed in the interior space of the nozzle.
Fig. 6A is a perspective view of a plate-shaped member having a cross section in the form of a four-petaled flower which is not tapered.
Fig. 6B is a perspective view of a plate-shaped member having a cross section in the form of a four-petaled flower which is tapered.
Fig. 7 is an exterior view of a nozzle provided with a plate-shaped member having a cross section in the form of a four-pointed star, according to a second embodiment of the present invention.
Fig. 8 shows an operation of installing the plate-shaped member having the cross section in the form of the four-pointed star in the nozzle.
Fig. 9 is a cross-sectional view of the nozzle with the plate-shaped member having the cross section in the form of the four-pointed star disposed in the interior space of the nozzle.
Fig. 10 is a perspective view of the plate-shaped member having the cross section in the form of the four-pointed star.
Fig. 11 shows various types of the cross section of the plate-shaped member ((A) to (L)), and a slit and plate-shaped members with the slit ((a) to (c)). The drawings (a) to (c) of Fig. 11 are a cross-sectional view for showing the slit, a perspective view of a plate-shaped member with the slit having a uniform cross section, and a perspective view of a plate-shaped member with the slit which is tapered, respectively.
Fig. 12 shows a different example of a machine tool including a nozzle of an embodiment of the present invention.
Fig. 13 shows another example of a machine tool including a nozzle of an embodiment of the present invention.
Fig. 14 shows a nozzle module connected to the coolant hose according to a third embodiment of the present invention.
Fig. 15 shows a nozzle module provided with a plate-shaped member having a cross section in the form of a four-petaled flower.
Fig. 16 shows an operation of installing the plate-shaped member having the cross section in the form of the four-petaled flower in the nozzle module.
Fig. 17 is a cross-sectional view of the nozzle module with the plate-shaped member having the cross section in the form of the four-petaled flower disposed in the interior space of the nozzle module.
Fig. 18 shows a nozzle module provided with a plate-shaped member having a cross section in the form of a four-pointed star according to a fourth embodiment of the present invention.
Fig. 19 shows an operation of installing the plate-shaped member having the cross section in the form of the four-pointed star in the nozzle module.
Fig. 20 is a cross-sectional view of the nozzle module with the plate-shaped member having the cross section in the form of the four-pointed star disposed in the interior space of the nozzle module.
Fig. 21 shows a nozzle module including a cylindrical fluid discharge part in which a plurality of nozzles are arranged in a row according to a fifth embodiment of the present invention.
Fig. 22 shows an operation of installing a plate-shaped member in each nozzle of the nozzle module.
Fig. 23 is a cross-sectional view of the nozzle module with the plate-shaped member disposed in the interior space of the nozzle module.
Fig. 24 shows arrangements of nozzles formed in the fluid discharge part.
Fig. 25 shows a nozzle module connected to the coolant hose according to a sixth embodiment of the present invention.
Fig. 26 shows a nozzle module including a panel-shaped fluid discharge part in which a plurality of nozzles are arranged in a row.
Fig. 27 shows an operation of installing a plate-shaped member in each nozzle of the nozzle module.
Fig. 28 is a cross-sectional view of the nozzle module with the plate-shaped member disposed in the interior space of the nozzle module.
Fig. 29 shows an example of a machine tool including a nozzle module according to an embodiment of the present embodiment.

### DETAILED DESCRIPTION OF THE PREFERRED EMBODIMENT

Embodiments in which a nozzle or a nozzle module of the present invention is applied to machine tools such as a grinding machine or a machining center will be mainly described herein. However, the field of application of the present invention is not intended to be limited to the illustrated examples. The nozzle or the nozzle module of the present invention is applicable to various situations requiring supply of a fluid.

Hereinafter, the embodiments of the present invention will be described with reference to the accompanying drawings.

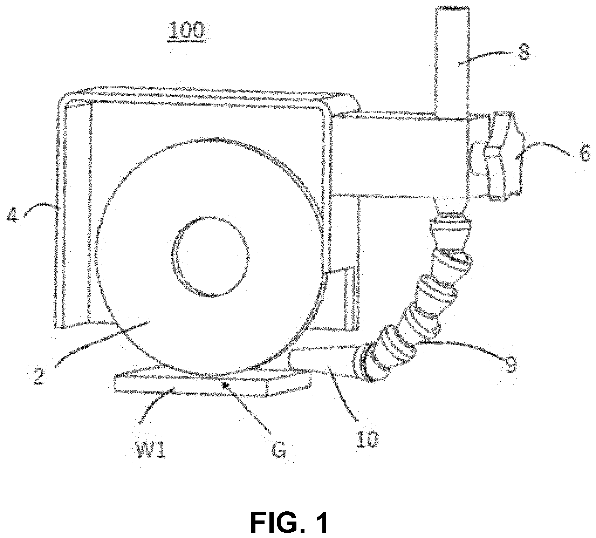

Fig. 1 shows an example of a machine tool including a nozzle according to one of some embodiments of the present invention. The machine tool of the present example is a surface grinding machine. A surface grinding machine 100 includes a grinding blade (a grindstone) 2, a protection cover 4, a height adjusting unit 6, a coolant pipe 8, a coolant hose 9, and a nozzle 10. Although not shown in the drawing, the surface grinding machine 100 includes a table for moving a workpiece W1 in a plane, and a column for vertically moving the workpiece W1 or the grinding blade 2.

The grinding blade 2 is rotationally driven in the clockwise direction in the plane of Fig. 1 by a driving source (not shown in the drawing). A surface of the workpiece W1 is ground by friction between the outer circumferential surface of the grinding blade 2 and the workpiece W1 at a grinding spot G. The protection cover 4 surrounds the grinding blade 2 rotating at a high speed and protects workers around the grinding machine by preventing chips of the workpiece W1 from scattering during grinding.

The height adjusting unit 6 is provided on the protection cover 4, and fixes the coolant pipe 8 movable up and down at a desired height. By this, it is possible to position the nozzle 10 connected to the coolant pipe 8 at a suitable height with respect to the grinding blade 2 and the workpiece W1. The nozzle 10 is connected to one end of the coolant pipe 8 via a coolant hose 9 and a tank in which the coolant (for example, water, oil, or the like) is stored (not shown in the drawing) is connected to the other end of the coolant pipe 8. The nozzle 10 can be fixed at the optimum position or in the optimum direction by manipulating the height adjusting unit 6 or adjusting the angle of the coolant hose such that the coolant is discharged from the nozzle 10 toward the grinding spot G.

### (First Embodiment)

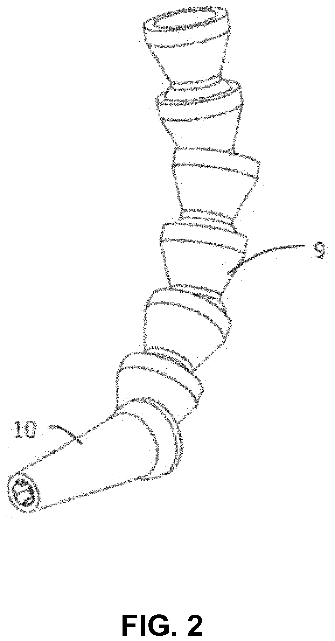

Fig. 2 shows connection between the nozzle 10 and the coolant hose 9 according to a first embodiment of the present invention. It is possible to obtain a desired length of the coolant hose 9 by connecting a plurality of pairs of female and male units in spherical contraposition to each other. The material of the coolant hose 9 may include resin (plastic). Further, an angle at which two pairs of the units can be appropriately adjusted by the connection mechanism, and, as a result, the direction of the nozzle 10 can be determined. The nozzle 10 may be made of resin (plastic), but the present invention is not limited thereto.

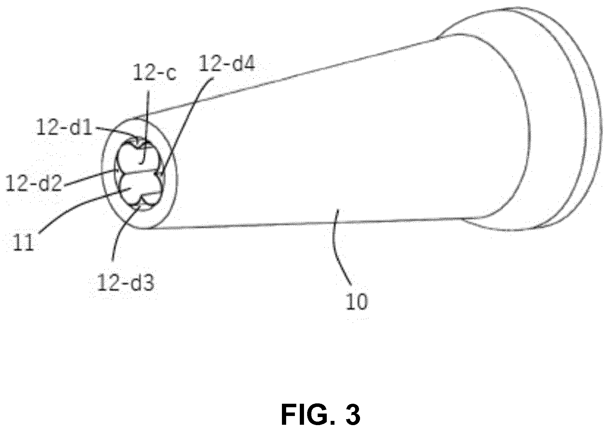

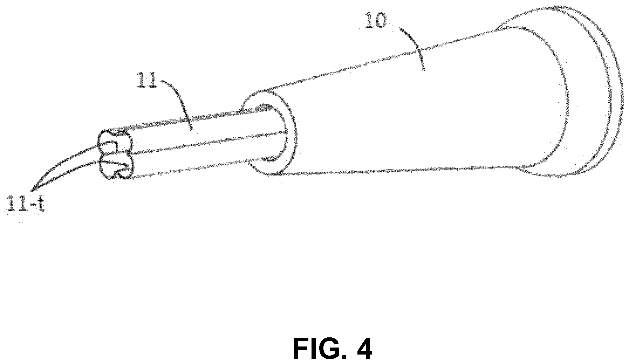

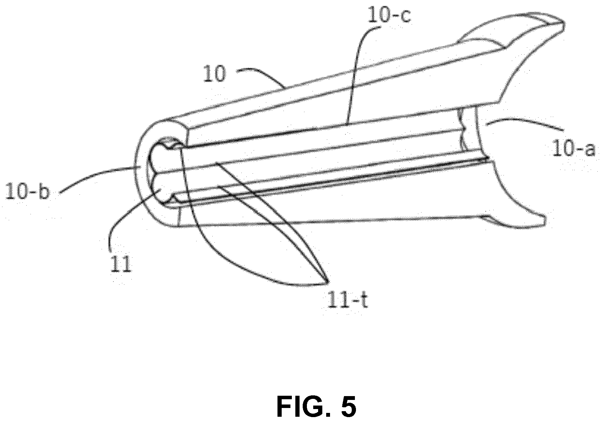

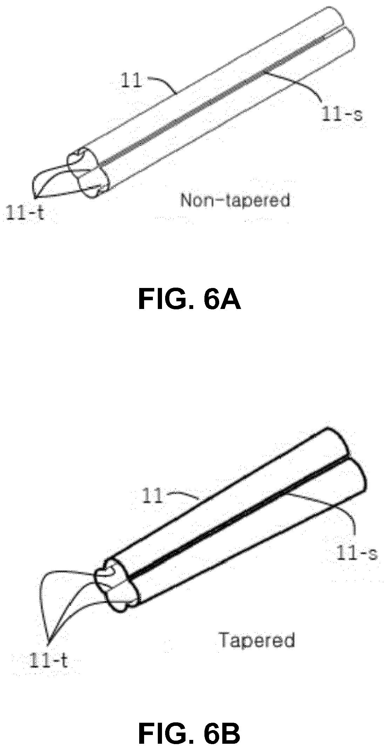

Fig. 3 is an enlarged view of the nozzle 10, Fig. 4 shows a state in which a plate-shaped member 11 is being inserted into the nozzle 10, and Fig. 5 is a cross-sectional view showing a state in which the the plate-shaped member 11 is fixed in the nozzle 10. As clearly understood from these drawings, the nozzle 10 is connected to the coolant hose 9 and includes an inlet 10-a through which the coolant (or a fluid) flows in, an outlet 10-b through which the coolant is discharged, and a wall surface 10-c forming an interior space connecting the inlet 10-a and the outlet 10-b. The inlet 10-a has a spherical surface and is connected to the male unit at the end of the coolant hose 9. The wall surface 10-c is cylindrical, and a plate-shaped member 11 of uniform cross section is inserted into the interior space of the nozzle 10 from the inlet 10-a or the outlet 10-b and fixed to the wall surface 10-c. In the case that the wall surface 10-c is tapered to form a truncated cone shaped interior space of the nozzle such that its cross section gradually decreases from the inlet toward the outlet, the plate-shaped member 11 to be inserted into the nozzle 10 may have a cross section gradually decreasing from the inlet toward the outlet in accordance with the shape of the wall surface 10-c. The former plate-shaped member 11 is shown in Fig. 6A, and the latter one is shown in Fig. 6B.

The plate-shaped member 11 shown in each of Figs. 3 to 5, Fig. 6A and Fig. 6B has a cross section in the form of a four-petaled flower and includes three folds 11-t and one slit 11-s to form the flower shape. The plate-shaped member 11 is formed by, for example, cutting a thin flat plate made of metal such as stainless steel into a predetermined size, and then bending it into the four-petaled flower. It is also possible to cut a thin flat plate after bending it into the flower shape. The plate-shaped member 11 has elasticity due to the three folds 11-t and the slit 11-s. In the case that the inner diameter of the wall surface 10-c of the nozzle 10 and the outer diameter of the plate-shaped member 11 are equal, or the outer diameter of the plate-shaped member 11 is slightly larger than the inner diameter of the wall surface 10-c of the nozzle 10 but the plate-shaped member 11 is compressed by the slit so that they become equal, an elastic force is generated as a result of repulsion against the compression and the plate-shaped member 11 is press-fitted (i.e. pressed and fixed) to the wall surface 10-c forming the interior space of the nozzle 10. Since the plate-shaped member 11 is press-fitted to the wall surface 10-c of the interior space of the nozzle 10 by its own elastic force, arrangement and assembly of the plate-shaped member 11 can be easily performed.

In the case that the plate-shaped member 11 having the cross section in the form of the four-petaled flower is inserted and fixed in the nozzle 10, the plate-shaped member 11 forms an inner flow path 12-c surrounded by it and outer flow paths 12-d1 to 12-d4 in the outer side of the plate-shaped member 11 and between the wall surface 10-c of the interior space of the nozzle 10 and the plate-shaped member 11. Since the plate-shaped member 11 is in the form of a thin plate, only its thickness inhibits the flow of the fluid and there is little loss of the overall flow rate. The fluid flowing in the interior space is guided by the plate-shaped member 11 having the cross section in the form of the four-petaled flower such that turbulence is prevented and the flow becomes laminar or rectified. In other words, the plurality of folds 11-t and the slit 11-s are parallel to the flow of the fluid, and a curved surface between two adjacent folds 11-t and a curved surface between the fold 11-t and the slit 11-s, as well as the plurality of folds 11-t and the slit 11-s, guide the fluid to increase straightness of the fluid. Therefore, the inner flow path 12-c enables the fluid to be discharged at the target position or a predetermined angle. Thus, diffusion (dispersion or turbulence) of the fluid out of the target position can be prevented. Since the fluid discharged from the outer flow paths 12-d1 to 12-d4 also has straightness, it contributes to the cooling of the workpiece W1 and helps to remove sludge and chips in the case that the nozzle 10 is applied to the machine tool.

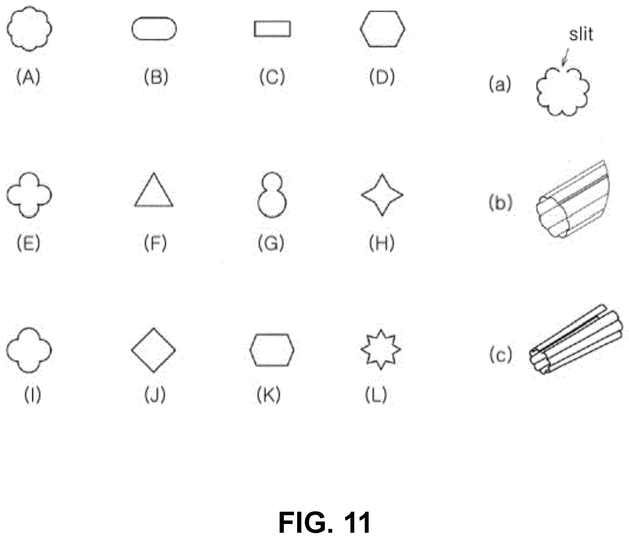

According to the present embodiment, the slit 11-s is formed in the plate-shaped member 11 and the plate-shaped member 11 is press-fitted to the wall surface 10-c of the interior space of the nozzle due to the elastic force generated from the repulsion against the compression by the slit 11-s. However, the slit 11-s is not necessarily required. In other embodiments, the plate-shaped member 11 can be press-fitted to the wall surface 10-c by adjusting the outer diameter of the plate-shaped member 11 and the inner diameter of the wall surface 10-c. The plate-shaped member 11 may be fixed in the interior space by a method other than the press fit, such as adhesion. This also applies to other embodiments than the first embodiment. The shape of the four-petaled flower caused by inserting the plate-shaped member 11 into the interior space can be appropriately changed by adjusting each of the intervals of the three folds 11-t and the slit 11-s. By this, flow rates of the fluid flowing through the inner flow path 12-c and the outer flow paths 12-d1 to 12-d4 can be varied. While the plate-shaped member 11 has the cross section in the form of the flower having four petals according to the present embodiment, the number of the petals may be two or more and an example having eight petals is shown in (A) of Fig. 11 which will described later. In addition, the bulge of the petal can also be properly changed, for example, to (E) or (I) of Fig. 11. Thus, the ratio of the flow rate of the fluid flowing through the inner flow path 12-c to the flow rate of the fluid flowing through the outer flow paths 12-d1 to 12-d4 can be determined. Generally, as the number of the petals increases, the flow rate of the fluid flowing through the inner flow path 12-c increases. Similarly, as the bulge of each petal is rounder (for example, the bulge of (I) of Fig. 11 is rounder than (E) of Fig. 11), the flow rate of the fluid flowing through the inner flow path 12-c increases.

### (Second Embodiment)

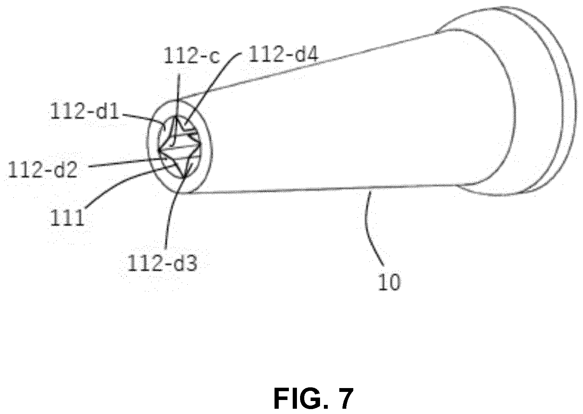

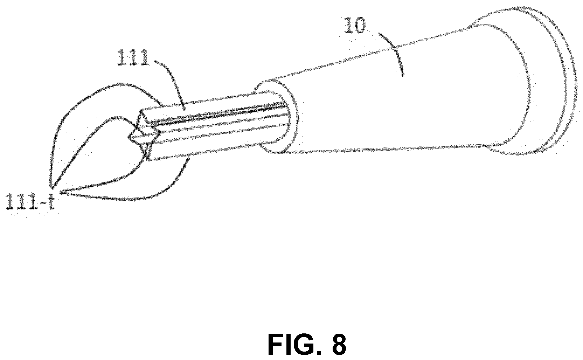

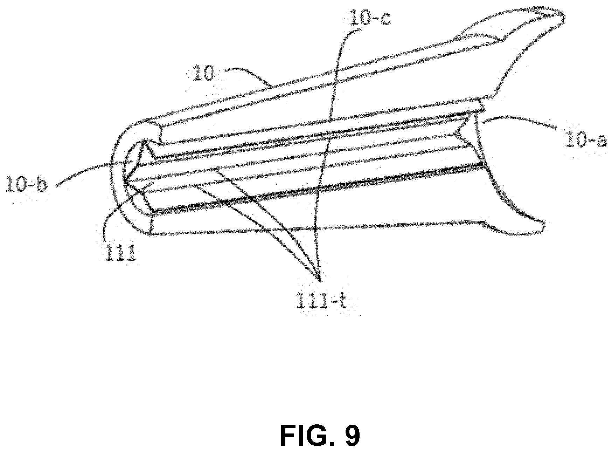

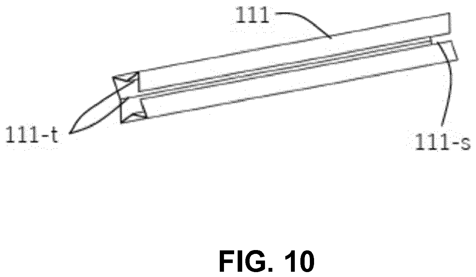

Figs. 7 to 10 show a nozzle according to a second embodiment of the present invention. The same reference numerals are used for the same features as those of the first embodiment and descriptions of the same features will be omitted. Fig. 7 is an enlarged view of the nozzle 10, Fig. 8 shows a state in which a plate-shaped member having a cross section in the form of a four-pointed star 111 is being inserted into the nozzle 10, and Fig. 9 is a cross-sectional view showing a state in which the the plate-shaped member 111 is fixed in the nozzle 10. The wall surface 10-c is cylindrical, and the plate-shaped member 111 having the uniform cross section shown in Fig. 10 is inserted into the interior space of the nozzle 10 from the inlet 10-a or the outlet 10-b and fixed to the wall surface 10-c. In the case that the wall surface 10-c is tapered to form a truncated cone shaped interior space of the nozzle such that its cross section gradually decreases from the inlet toward the outlet, the plate-shaped member 111 to be inserted into the nozzle 10 may have a cross section gradually decreasing from the inlet toward the outlet in accordance with the shape of the wall surface 10-c.

The plate-shaped member 111 has the cross section in the form of the four-pointed star and includes seven folds 111-t and one slit 111-s to form the star shape. In the case that the plate-shaped member 111 having the cross section in the form of the four-pointed star is inserted and fixed in the nozzle 10, the plate-shaped member 111 forms an inner flow path 112-c surrounded by it and outer flow paths 112-d1 to 112-d4 in the outer side of the plate-shaped member 111 and between the wall surface 10-c of the interior space of the nozzle 10 and the plate-shaped member 111. Since the plate-shaped member 111 is in the form of a thin plate, only its thickness inhibits the flow of the fluid and there is little loss of the overall flow rate. The flow of the fluid is guided by the plate-shaped member having the cross section in the form of the four-pointed star such that turbulence is prevented and the flow becomes laminar or rectified. In other words, the plurality of folds 111-t and the slit 111-s are parallel to the flow of the fluid, and a curved surface between two adjacent folds 111-t and a curved surface between the fold 111-t and the slit 111-s, as well as the plurality of folds 111-t and the slit 111-s, guide the fluid to increase straightness of the fluid. Therefore, the inner flow path 112-c enables the fluid to be discharged at the target position or a predetermined angle. Thus, diffusion (dispersion or turbulence) of the fluid out of the target position can be prevented. Since the fluid discharged from the outer flow paths 112-d1 to 112-d4 also has straightness, it contributes to the cooling of the workpiece W1 and helps to remove sludge and chips in the case that the nozzle 10 is applied to the machine tool. While the plate-shaped member 111 has the cross section in the form of the four-pointed star according to the present embodiment, it may have different types of cross section. For example, an example of the four-pointed star is shown in (H) of Fig. 11, which will be described later, and an example of a eight-pointed star is shown in (L) of Fig. 11. The number of limbs (or arms) of the star is three or more. The sharpness of the limbs (arms) may also be properly changed. Thus, the ratio of the flow rate of the fluid flowing through the inner flow path 112-c to the flow rate of the fluid flowing through the outer flow paths 112-d1 to 112-d4 can be determined. Generally, as the number of the limbs increases, the flow rate of the fluid flowing through the inner flow path 112-c increases. Similarly, as each limb has a gentle slope, the flow rate of the fluid flowing through the inner flow path 112-c increases. According to the present embodiment, the slit 111-s is formed in the plate-shaped member 111 and the plate-shaped member 111 is press-fitted to the wall surface 10-c of the interior space of the nozzle due to the elastic force generated from the repulsion against the compression by the slit 111-s. However, the slit 111-s is not necessarily required. The plate-shaped member 111 can be press-fitted to the wall surface 10-c by adjusting the outer diameter of the plate-shaped member 111 and the inner diameter of the wall surface 10-c. The plate-shaped member 111 may be fixed in the interior space by a method other than the press fit, such as adhesion. This also applies to other embodiments than the second embodiment.

The drawings (A) to (L) of Fig. 11, which has been already referred to when describing the first and the second embodiments, show various modifications of the cross section of the plate-shaped member. Each of the drawings (A), (E) and (I) of Fig. 11 shows a flowerlike cross-sectional shape. The drawing (B) of Fig. 11 shows an elliptical cross sectional shape, and the drawings (C), (D), (F), (J) and (K) of Fig. 11 show triangular and polygonal cross sectional shapes. The drawing (G) of Fig. 11 shows a gourd-like cross-sectional shape, and each of the drawings of (H) and (L) shows a star like cross-sectional shape. The plate-shaped member may adopt any other suitable cross-sectional shape. While no slit is provided in any of (A) to (L) of Fig. 11, each of them may have a slit as shown in (a) of Fig. 11. Further, the plate-shaped member may be straight such that its cross section is uniform as shown in (b) of Fig. 11, or may be tapered such that its cross section gradually decreases toward the outlet as shown in (b) of Fig. 11. In the case of (c) of Fig. 11, the pressure of the fluid discharged from the outlet can be increased as compared with (b) of Fig. 11. In the above described first and second embodiments and other embodiments which will be described later, any of various plate-shaped members as shown in Fig. 11 can be employed.

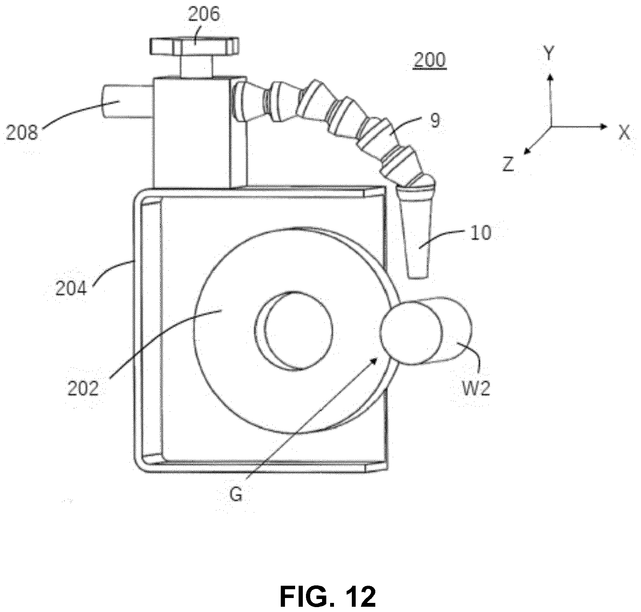

In the above description, the nozzle according to one of the embodiments of the present invention is employed in the surface grinding machine, but may be employed in other machine tools. Fig. 12 shows another example of a machine tool including the nozzle. The machine tool of this example is a cylindrical grinding machine. A cylindrical grinding machine 200 includes a grinding blade 202, a protection cover 204, a position adjusting unit 206, a coolant pipe 208, a coolant hose 209, and a nozzle 10. As described above, the nozzle 10 includes the plate-shaped member according to the first embodiment shown in Figs. 3 to 6, the second embodiment shown in Figs. 7 to 10, or one of the examples shown in Fig. 11. Although not shown in Fig. 12, the cylindrical grinding machine 200 may include a transfer device which rotates a workpiece W2 by supporting it at the center of its both end faces and move it along the central axis (i.e., in the Z axis direction). The grinding blade 202 is rotationally driven in the clockwise direction in the plane of Fig. 12 by a driving source (not shown in the drawing). A surface of the workpiece W2 is ground by friction between the outer circumferential surface of the grinding blade 202 and a contact surface of the workpiece W2. The protection cover 204 surrounds the grinding blade 202 rotating at a high speed and protects workers around the grinding machine by preventing chips of the workpiece W2 from scattering during grinding.

The position adjusting unit 206 is provided on the protection cover 204, and fixes the coolant pipe 208 movable in the X axis direction at a desired position. By this, the nozzle 10 connected to the coolant hose 9 coupled to the coolant pipe 208 is disposed at an optimum position to discharge the coolant around a grinding spot G of the workpiece W2 and the grinding blade 202. A tank in which the coolant is stored (not shown in the drawing) is connected to one end of the coolant pipe 8. The nozzle 10 according to one of the embodiments of the present invention can also supply the coolant effectively toward the grinding spot G in such a cylindrical grinding machine.

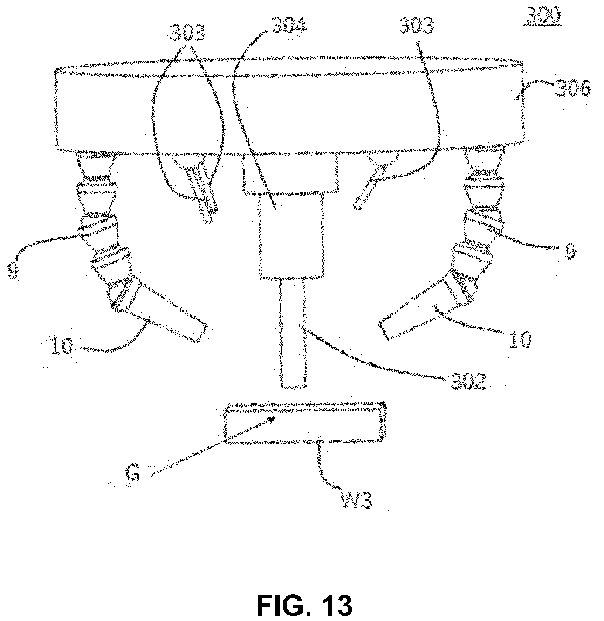

Fig. 13 shows a machining center which is another machine tool employing a nozzle according to an embodiment of the present invention. A machining center 300 includes a spindle 304 and a number of different types of tools (blades) 302 can be replaceably provided on the spindle 304. The spindle 304 can rotate the tool 302 by a spindle motor which is not shown in the drawing. The machining center 300 further includes a driving unit for moving the spindle 304 and/or the tool (blade) 302 up and down, which is not shown in the drawing. By exchanging the tool 302, the machining center 300 enables various operations, such as milling, drilling, boring, and tapping, to be performed. A column 306 is provided with a plurality of nozzles for supplying the coolant as well as the spindle 304. Two nozzles 10 discharge the coolant supplied via the coolant hose 9 around a machining spot G of a workpiece W3 and one of them may be the nozzle of the first embodiment (see Figs. 3 to 6) or the nozzle of the second embodiment (see Figs. 7 to 10). The machining center 300 further includes three single small nozzles 303. Each of the nozzles 303 is a tubular nozzle and has a structure capable of freely changing the angle at which the coolant is discharged. The coolant can be supplied more effectively by inserting and fixing the plate-shaped member in the tubular body of the nozzle, similarly to a single nozzle which will be described later. In the present embodiment, the column 306 is provided with the two nozzles 10 connected to the coolant hose 9 and the three single nozzles 303 in addition to the spindle 304 and the tool 302. In a different embodiment, the column 306 is provided with a proper number and proper types of nozzles which are selected from a group including the nozzles 10 and/or single nozzles 303. Each of the nozzles 10 and the single nozzles 303 is connected to a tank in which the coolant (for example, water or oil) is stored (not shown in the drawing). The workpiece W3 can be moved two-dimensionally in a horizontal plane by a table (not shown in the drawing).

### (Third Embodiment)

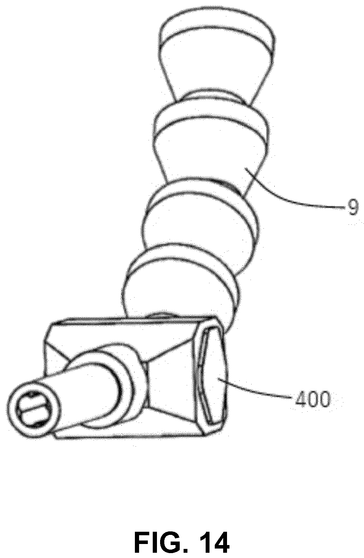

A nozzle module including a single nozzle having one fluid discharge outlet according to a third embodiment of the present invention is described referring to Figs. 14 to 17. The same reference numerals are used for the same features as those of the first and second embodiments and descriptions of the same features will be omitted. Fig. 14 shows a nozzle module 400 connected to the coolant hose 9 according to the third embodiment of the present invention. The nozzle module 400 may be made of resin (plastic) or metal such as stainless steel, but the present invention is not limited thereto.

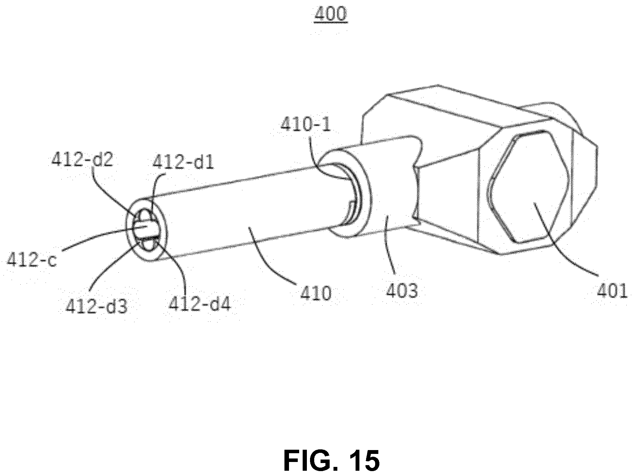

Fig. 15 is an enlarged view of the nozzle module 400. The nozzle module 400 includes a body 401 and a fluid discharge part 410 (which is a cylindrical single nozzle). A female screw is formed on the inner surface of a protrusion 403 of the body 401, and a male screw 410-1 is formed on a corresponding portion (i.e. an inlet) of the fluid discharge part 410 and engaged with the female screw. The connection between the body 401 and the fluid discharge part 410 is not limited to the screw-joining, but may be achieved by any method for connecting them detachably, such as inserting or press fitting. As will be described later, the body 401 is hollow inside and sends the fluid supplied from the coolant hose 9 to the fluid discharge part 410.

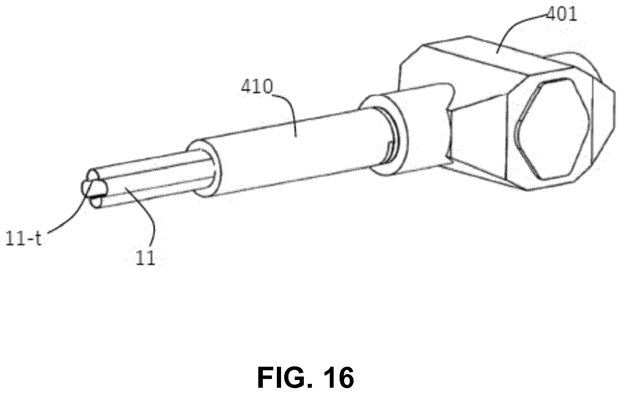

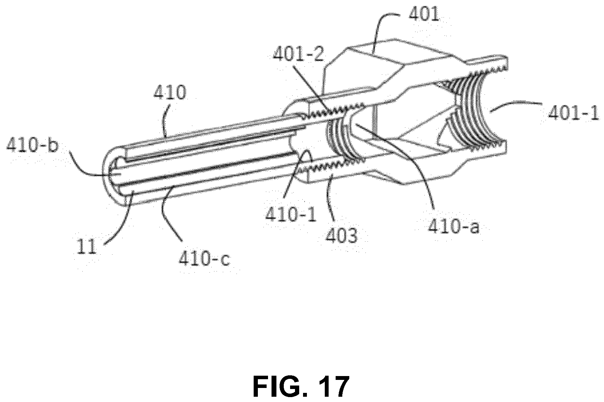

Fig. 16 shows a state in which the plate-shaped member 11 is being inserted into the fluid discharge part 410 of the nozzle module 400, and Fig. 17 is a cross-sectional view showing a state in which the the plate-shaped member 11 is fixed in the nozzle module 400. As clearly understood from these drawings, the nozzle module 400 is connected with the coolant hose 9 by screw-joining. More specifically, a female screw 401-1 is formed at the inlet side of the body 401 and engaged with a male screw formed at one end of the coolant hose 9. Similarly, a female screw 401-2 is formed at the outlet side of the body 401 and engaged with the male screw 410-1 of the fluid discharge part 410. As shown in Fig. 17, the interior space of the hollow body 401 is extended in the width direction. Thus, a flow path of the coolant in the fluid discharge part 410 is narrower than that in the body 401 and the coolant is discharged from the outlet of the fluid discharge part 410 at a high pressure. As shown in the drawings, the flow path is formed in an interior space of the fluid discharge part 410. More specifically, the fluid discharge part 410 includes an inlet 410-a through which the coolant (or a fluid) flows in, an outlet 410-b through which the coolant is discharged, and a wall surface 410-c forming the interior space connecting the inlet 410-a and the outlet 410-b. A cylinder having the same diameter from the inlet 410-a to the outlet 410-b is formed by the wall surface 410-c. In other words, the wall surface 410-c is cylindrical and the plate-shaped member 11 of uniform cross section is inserted in the cylinder formed by the wall surface 410-c from the inlet 410-a or the outlet 410-b and fixed therein. In the case that the wall surface 410-c is tapered to form a truncated cone shaped interior space of the fluid discharge part such that its cross section gradually decreases from the inlet toward the outlet, the plate-shaped member 11 to be inserted may have a cross section gradually decreasing from the inlet toward the outlet in accordance with the shape of the wall surface 410-c. The former and latter plate-shaped members 11 are shown in Figs. 6A and 6B described with respect to the first embodiment, respectively.

The plate-shaped member 11 shown in each of Figs. 15 to 17 has a cross section in the form of the four-petaled flower and includes the three folds 11-t and the one slit 11-s to form the flower shape. The plate-shaped member 11 is formed by, for example, cutting a thin flat plate made of metal such as stainless steel into a predetermined size, and then bending it into the four-petaled flower. It is also possible to cut a thin flat plate after bending it into the flower shape. The plate-shaped member 11 has elasticity due to the three folds 11-t and the slit 11-s. In the case that the inner diameter of the wall surface 410-c of the fluid discharge part 410 and the outer diameter of the plate-shaped member 11 are equal, or the outer diameter of the plate-shaped member 11 is slightly larger than the inner diameter of the wall surface 410-c of the fluid discharge part 410 but the plate-shaped member 11 is compressed by the slit so that they become equal, an elastic force is generated as a result of repulsion against the compression and the plate-shaped member 11 is press-fitted to the wall surface 410-c forming the interior space of the fluid discharge part 410. Since the plate-shaped member 11 is press-fitted to the wall surface 410-c of the interior space of the fluid discharge part 410 by its own elastic force, arrangement and assembly of the plate-shaped member 11 can be easily performed.

In the case that the plate-shaped member 11 having the cross section in the form of the four-petaled flower is inserted and fixed in the fluid discharge part 410, the plate-shaped member 11 forms an inner flow path 412-c surrounded by it and outer flow paths 412-d1 to 412-d4 in the outer side of the plate-shaped member 11 and between the wall surface 410-c of the interior space of the fluid discharge part 410 and the plate-shaped member 11. Since the plate-shaped member 11 is in the form of the thin plate, only its thickness inhibits the flow of the fluid and there is little loss of the overall flow rate. The fluid flowing in the interior space is guided by the plate-shaped member 11 having the cross section in the form of the four-petaled flower such that turbulence is prevented and the flow becomes laminar or rectified. In other words, the plurality of folds 11-t and the slit 11-s are parallel to the flow of the fluid, and the curved surface between two adjacent folds 11-t and the curved surface between the fold 11-t and the slit 11-s, as well as the plurality of folds 11-t and the slit 11-s, guide the fluid to increase the straightness of the fluid. Therefore, the inner flow path 412-c enables the fluid to be discharged at a target position or a predetermined angle. Thus, diffusion (dispersion or turbulence) of the fluid out of the target position can be prevented. Since the fluid discharged from the outer flow paths 412-d1 to 412-d4 also has straightness, it contributes to cooling of a workpiece and helps to remove sludge and chips in the case that the nozzle module 400 is applied to the machine tool.

According to the present embodiment, the slit 11-s is formed in the plate-shaped member 11 and the plate-shaped member 11 is press-fitted to the wall surface 410-c of the interior space of the nozzle due to the elastic force generated from the repulsion against the compression by the slit 11-s. However, the slit 11-s is not necessarily required. In other embodiments, the plate-shaped member 11 can be press-fitted to the wall surface 410-c by adjusting the outer diameter of the plate-shaped member 11 and the inner diameter of the wall surface 410-c. The shape of the four-petaled flower caused by inserting the plate-shaped member 11 into the interior space can be appropriately changed by adjusting each of the intervals of the three folds 11-t and the slit 11-s. By this, flow rates of the fluid flowing through the inner flow path 412-c and the outer flow paths 412-d1 to 412-d4 can be varied. While the plate-shaped member 11 has the cross section in the form of the flower having four petals according to the present embodiment, the number of the petals may be two or more and the drawing (A) of Fig. 11 shows the example having eight petals as described above. In addition, the bulge of the petal can also be properly changed, for example, to (E) or (I) of Fig. 11. Thus, the ratio of the flow rate of the fluid flowing through the inner flow path 412-c to the flow rate of the fluid flowing through the outer flow paths 412-d1 to 412-d4 can be determined. Generally, as the number of the petals increases, the flow rate of the fluid flowing through the inner flow path 412-c increases. Similarly, as the bulge of each petal is rounder (for example, the bulge of (I) of Fig. 11 is rounder than (E) of Fig. 11), the flow rate of the fluid flowing through the inner flow path 412-c increases.

### (Fourth Embodiment)

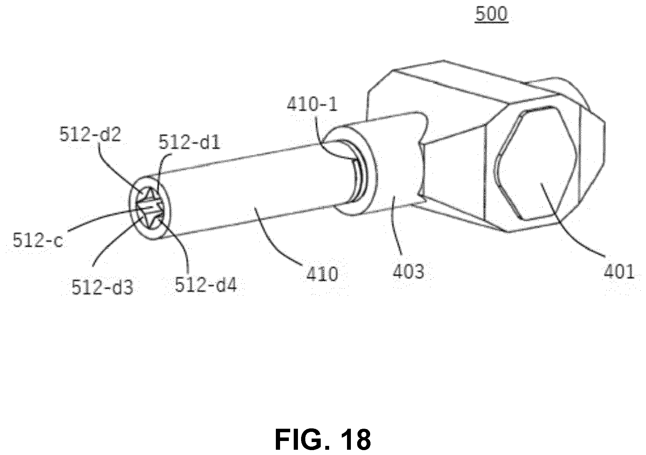

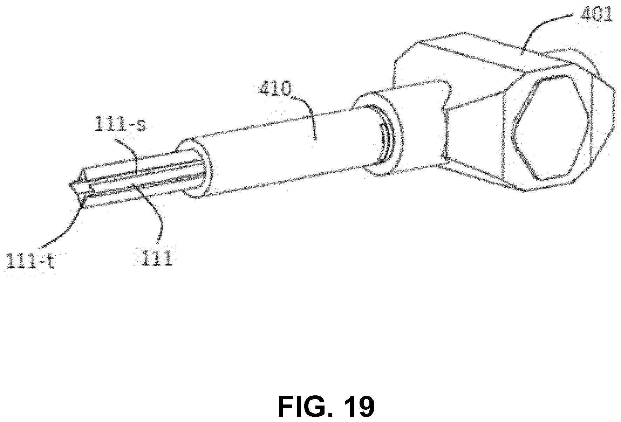

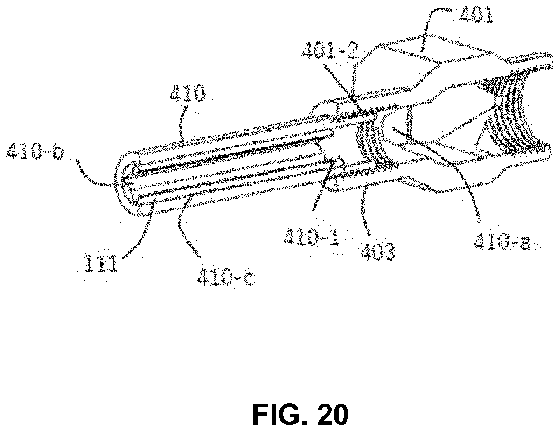

Figs. 18 to 20 show a nozzle module including a single nozzle having one fluid discharge outlet according to a fourth embodiment of the present invention. The same reference numerals are used for the same features as those of the first to third embodiments and descriptions of the same features will be omitted. Fig. 18 is an enlarged view showing a nozzle module 500 and the nozzle module 500 includes a body 401 and a fluid discharge part 410 which have similar structures as those of the third embodiment. Fig. 19 shows a state in which the plate-shaped member having the cross section in the form of the four-pointed star 111 is being inserted into the fluid discharge part 410 connected to the body 401 of the nozzle module 500, and Fig. 20 is a cross-sectional view showing a state in which the the plate-shaped member 111 is fixed in the nozzle module 500. The wall surface 410-c is cylindrical, and the plate-shaped member 111 having the uniform cross section shown in Fig. 10 is inserted into the interior space formed by the wall surface 410-c from the inlet 410-a or the outlet 410-b and fixed therein. In the case that the wall surface 410-c is tapered to form a truncated cone shaped interior space of the fluid discharge part such that its cross section gradually decreases from the inlet toward the outlet, the plate-shaped member 111 to be inserted may have a cross section gradually decreasing from the inlet toward the outlet in accordance with the shape of the wall surface 410-c.

In the present embodiment, the plate-shaped member 111 has the cross section in the form of the four-pointed star and includes the seven folds 111-t and the one slit 111-s to form the star shape. In the case that the plate-shaped member 111 having the cross section in the form of the four-pointed star is inserted and fixed in the fluid discharge part 410, the plate-shaped member 111 forms an inner flow path 512-c surrounded by it and outer flow paths 512-d1 to 512-d4 in the outer side of the plate-shaped member 111 and between the wall surface 410-c and the plate-shaped member 111. Since the plate-shaped member 111 is in the form of the thin plate, only its thickness inhibits the flow of the fluid and there is little loss of the overall flow rate. The flow of the fluid is guided by the plate-shaped member having the cross section in the form of the four-pointed star such that turbulence is prevented and the flow becomes laminar or rectified. In other words, the plurality of folds 111-t and the slit 111-s are parallel to the flow of the fluid, and the curved surface between two adjacent folds 111-t and the curved surface between the fold 111-t and the slit 111-s, as well as the plurality of folds 111-t and the slit 111-s, guide the fluid to increase straightness of the fluid. Therefore, the inner flow path 512-c enables the fluid to be discharged at a target position or a predetermined angle. Thus, diffusion (dispersion or turbulence) of the fluid out of the target position can be prevented. Since the fluid discharged from the outer flow paths 512-d1 to 512-d4 also has straightness, it contributes to cooling of a workpiece and helps to remove sludge and chips in the case that the nozzle 500 is applied to the machine tool. While the plate-shaped member 111 has the cross section in the form of the four-pointed star according to the present embodiment, it may have different types of cross section. The cross section of the plate-shaped member may have an eight-pointed star shape as shown in (L) of Fig. 11. The number of limbs (or arms) of the star is three or more. The sharpness of the limbs (arms) may also be properly changed. Thus, the ratio of the flow rate of the fluid flowing through the inner flow path 512-c to the flow rate of the fluid flowing through the outer flow paths 512-d1 to 512-d4 can be determined. Generally, as the number of the limbs increases, the flow rate of the fluid flowing through the inner flow path 512-c increases. Similarly, as each limb has a gentle slope, the flow rate of the fluid flowing through the inner flow path 512-c increases.

### (Fifth Embodiment)

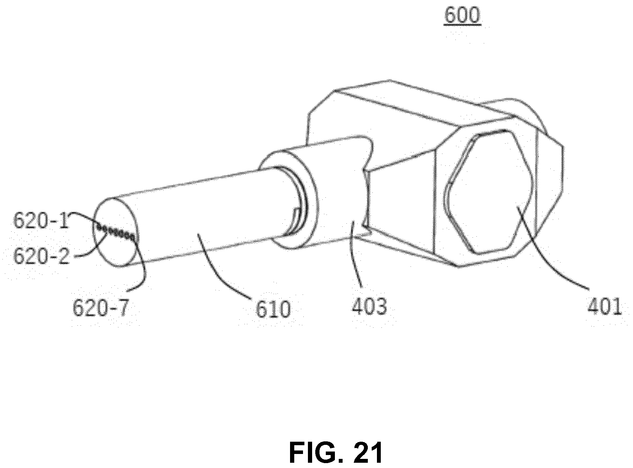

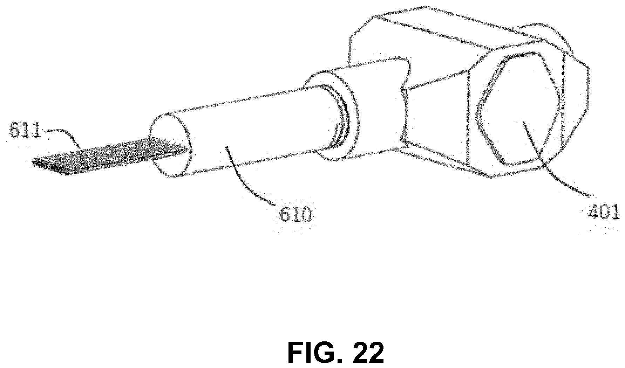

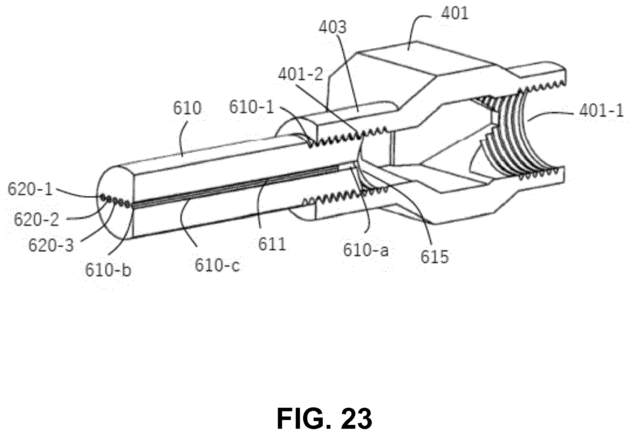

Figs. 21 to 23 show a nozzle module including a multi-nozzle mechanism according to a fifth embodiment of the present invention. The same reference numerals are used for the same features as those of the first to fourth embodiments and descriptions of the same features will be omitted. Fig. 21 is an enlarged view showing a nozzle module 600 and the nozzle module 600 includes a body 401 similar to that of the third (or fourth) embodiment. A fluid discharge part 610 is connected to the body 401, for example, by screw-joining, and provided with a plurality of through holes (for example, seven (7) through holes) formed therein which form nozzles 620-1 to 620-7 arranged in a row. The cross section of the fluid discharge part 610 has a plurality of (i.e. seven) holes arranged in a row. Fig. 22 shows a state in which small plate-shaped members 611 are being inserted into the fluid discharge part 610 connected to the body 401 of the nozzle module 600 and each of the small plate-shaped members 611 has a cross section of a predetermined shape (for example, one of (A) to (L) of Fig. 11). Fig. 23 is a cross-sectional view showing a state in which the the plate-shaped members 611 are fixed in the nozzle module 600. As clearly understood from the drawings, the female screw 401-2 is formed at the fluid outlet side of the body 401 and engaged with a male screw 610-1 of the fluid discharge part 610. The interior space of the hollow body 401 is extended in the width direction. Thus, a flow path of the coolant in the fluid discharge part 610 is narrower than that in the body 401 and the coolant is discharged from the outlet of the fluid discharge part 610 at a high pressure. An end surface 615 on the inlet side of the fluid discharge part 610 is, for example, conical or spherical in shape, so that the fluid easily flows into each of the narrow tubular nozzles 620-1 to 620-7.

A wall surface 610-c of each of the nozzles 620-1 to 620-7 is cylindrical, and the plate-shaped member 611 of uniform cross section as shown in Fig. 11 is inserted into the interior space of each nozzle from an inlet 610-a or an outlet 610-b and fixed to the wall surface 610-c. In the case that the wall surface 610-c is tapered to form a truncated cone shaped interior space of the nozzle such that its cross section gradually decreases from the inlet toward the outlet, the plate-shaped member 611 to be inserted may have a cross section gradually decreasing from the inlet toward the outlet in accordance with the shape of the wall surface 610-c.

The plate-shaped members 611 of the present embodiment has the cross section of the predetermined shape such as one of (A) to (L) of Fig. 11 and includes a plurality of folds and one slit to form the shape. In the case that the plate-shaped member 611 is inserted and fixed in each of the nozzles 620-1 to 620-7, an inner flow path surrounded by the plate-shaped member 611 is formed and outer flow paths are formed in the outer side of the plate-shaped member 611 and between the wall surface of the interior space of each nozzle and the plate-shaped member 611. Since the plate-shaped member 611 is in the form of a thin plate, only its thickness inhibits the flow of the fluid and there is little loss of the overall flow rate. The fluid flow is guided by the plate-shaped member of a predetermined shape such that turbulence is prevented and the flow becomes laminar or rectified. In other words, the plurality of folds and the slit are parallel to the flow of the fluid, and a curved surface between two adjacent folds and a curved surface between the fold and the slit, as well as the plurality of folds and the slit, guide the fluid to increase the straightness of the fluid. Therefore, the inner flow path of each of the nozzles 620-1 to 620-7 enables the fluid to be discharged at a target position or a predetermined angle. Thus, diffusion (dispersion or turbulence) of the fluid out of the target position can be prevented. Since the fluid discharged from the outer flow paths of each of the nozzles 620-1 to 620-7 also has straightness, it contributes to cooling of a workpiece and helps to remove sludge and chips in the case that the nozzle module 600 is applied to the machine tool.

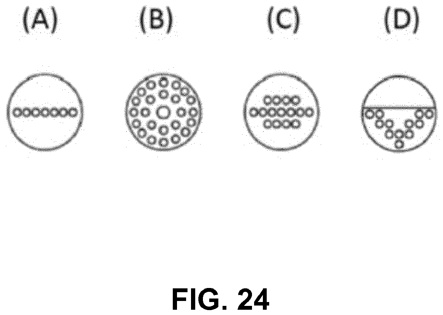

According to the fifth embodiment, the nozzles 620-1 to 620-7 are disposed horizontally in a row in the cylindrical fluid discharge part 610 as shown in Figs. 21 to 23, and a plurality of small holes of the nozzles are arranged in a row as shown in (A) of Fig. 24. In other embodiments, the small holes may be formed over the entire surface as shown in (B) of Fig. 24, or may be arranged in multiple stages as shown in (C) of Fig. 24. In another embodiment, the upper part of the fluid discharge part 610 may be cut and flattened and the small holes may be arranged in a V-shape in accordance with the shape of the blade (or the grindstone), as shown in (D) of Fig. 24. The small holes may be arranged in a different form from those described above.

### (Sixth Embodiment)

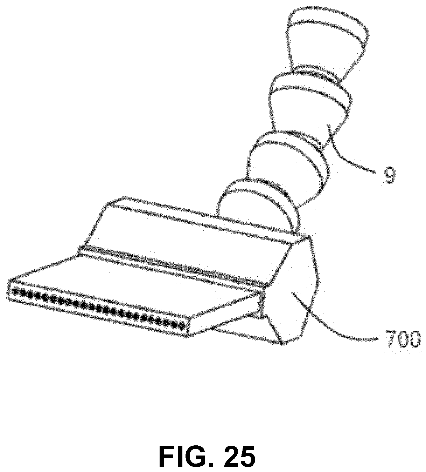

In the following, a nozzle module including a multi-nozzle mechanism which has a plurality of fluid discharge outlets according to a sixth embodiment of the present invention is described with reference to Figs. 25 to 28. The same reference numerals are used for the same features as those of the first to fifth embodiments and descriptions of the same features will be omitted. Fig. 25 shows a nozzle module 700 according to the sixth embodiment connected with the coolant hose 9. The nozzle module 700 may be made of resin (plastic) or metal such as stainless steel, but the present invention is not limited thereto.

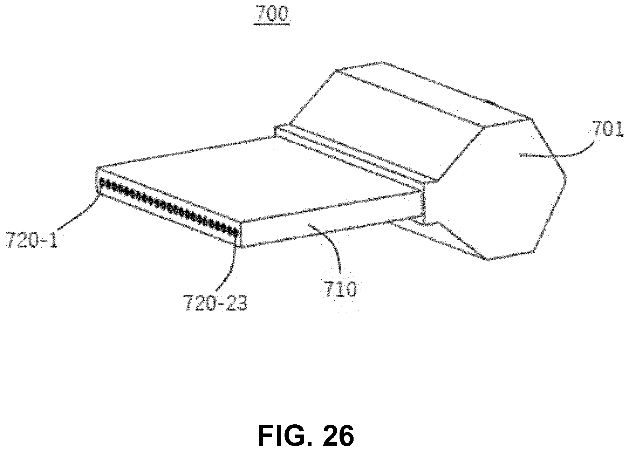

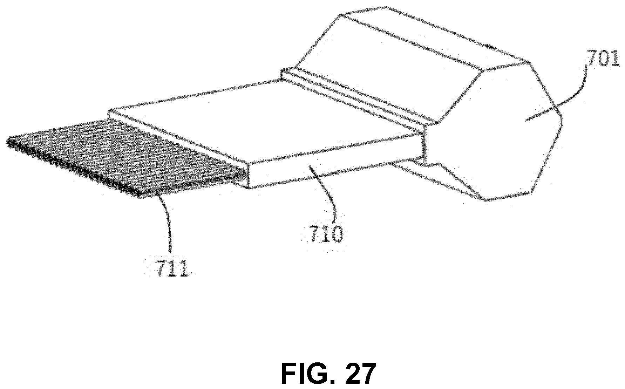

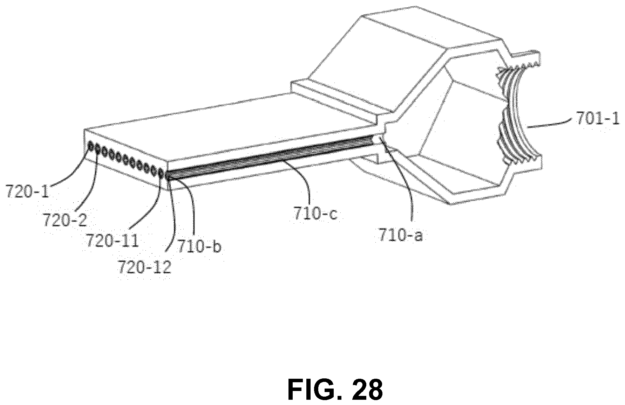

Fig. 26 is an enlarged view showing the nozzle module 700 and the nozzle module 700 includes a body 701 and a fluid discharge part 710 which is a flat plate-like flat nozzle. In the present embodiment, the body 701 is molded integrally with the fluid discharge part 710. In other embodiments, they are manufactured individually and then combined. Fig. 27 shows a state in which a plate-shaped member 711 is being inserted into each of a plurality of nozzles 720-1 to 720-23 formed in the fluid discharge part 710 of the nozzle module 700. In the present example, the number of the nozzles is 23 and the nozzles 720-1 to 720-23 are 23 cylindrical small through holes formed in the fluid discharge part 710. Fig. 28 is a cross-sectional view showing a state in which the the plate-shaped member 711 is fixed in the nozzle. As clearly understood from these drawings, the nozzle module 700 is connected with the coolant hose 9 by screw-joining. More specifically, a female screw 701-1 is formed at the inlet side of the body 701 and engaged with a male screw formed at one end of the coolant hose 9. At the outlet side of the body 701, the fluid discharge part 710 is connected to the body 701, for example, by the integral molding. As shown in Fig. 28, the interior space of the hollow body 701 is extended in the width direction. Thus, a flow path of the coolant in the fluid discharge part 710 is narrower than that in the body 701 and the coolant is discharged from the outlet of the fluid discharge part 710 at a high pressure. As shown in the drawings, a flow path is formed in an interior space of each of the nozzles 720-1 to 720-23 of the fluid discharge part 710. More specifically, each of the nozzles 720-1 to 720-23 formed in the fluid discharge part 710 includes an inlet 710-a through which the coolant flows in, an outlet 710-b through which the coolant is discharged, and a wall surface 710-c forming the interior space connecting the inlet 710-a and the outlet 710-b. A cylinder having the same diameter from the inlet 710-a to the outlet 710-b is formed by the wall surface 710-c. In other words, the wall surface 710-c is cylindrical and the plate-shaped member 711 of uniform cross section is inserted in the cylinder formed by the wall surface 710-c from the inlet 710-a or the outlet 710-b and fixed therein. In the case that the wall surface 710-c is tapered to form a truncated cone shaped interior space of the nozzle such that its cross section gradually decreases from the inlet toward the outlet, the plate-shaped member 711 to be inserted may have a cross section gradually decreasing from the inlet toward the outlet in accordance with the shape of the wall surface 710-c. The former and latter plate-shaped members 711 are shown in Figs. 6A and 6B described with respect to the first embodiment, respectively.

The plate-shaped member 711 of the present embodiment has the cross section of a predetermined shape such as one of (A) to (L) of Fig. 11 and includes a plurality of folds and one slit to form the shape. In the case that the plate-shaped member 711 is inserted and fixed in each of the nozzles 720-1 to 720-23, an inner flow path surrounded by the plate-shaped member 711 is formed and outer flow paths are formed in the outer side of the plate-shaped member 711 and between the wall surface of the interior space of each nozzle and the plate-shaped member 711. Since the plate-shaped member 711 is in the form of a thin plate, only its thickness inhibits the flow of the fluid and there is little loss of the overall flow rate. The fluid flow is guided by the plate-shaped member of a predetermined shape such that turbulence is prevented and the flow becomes laminar or rectified. In other words, the plurality of folds and the slit are parallel to the flow of the fluid, and a curved surface between two adjacent folds and a curved surface between the fold and the slit, as well as the plurality of folds and the slit, guide the fluid to increase the straightness of the fluid. Therefore, the inner flow path of each of the nozzles 720-1 to 720-23 enables the fluid to be discharged at a target position or a predetermined angle. Thus, diffusion (dispersion or turbulence) of the fluid out of the target position can be prevented. Since the fluid discharged from the outer flow paths of each of the nozzles 720-1 to 720-23 also has straightness, it contributes to cooling of a workpiece and helps to remove sludge and chips in the case that the nozzle module 700 is applied to the machine tool.

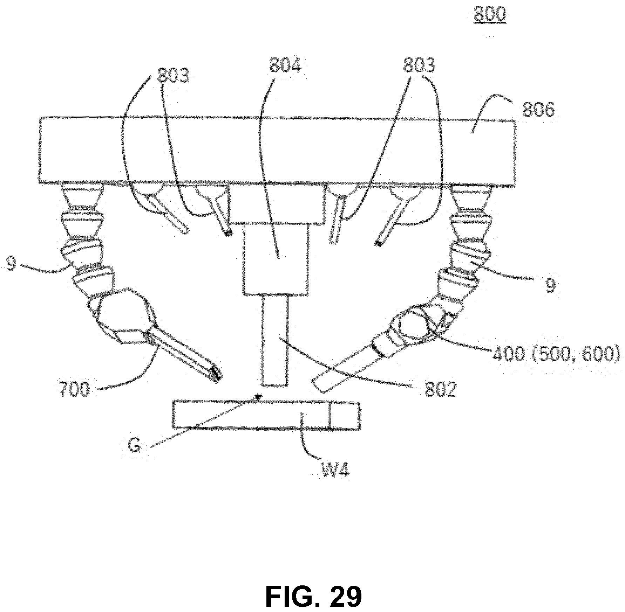

Each of the nozzle modules 400, 500, 600, and 700 according to the third to sixth embodiments can also be employed as a coolant supply means of various machine tools such as the surface grinding machine and the cylindrical grinding machine. Fig. 29 shows a machining center 800 which employs the nozzle module 700 and the nozzle module 400 (or 500 or 600). The machining center 800 includes a spindle 804 and a number of different types of tools (blades) 802 can be replaceably provided on the spindle 804. The spindle 804 can rotate the tool 802 by a spindle motor which is not shown in the drawing. The machining center 800 further includes a driving unit for moving the spindle 804 and/or the tool (blade) 802 up and down, which is not shown in the drawing. By exchanging the tool 802, the machining center 800 enables various operations, such as milling, drilling, boring, and tapping, to be performed. A column 806 is provided with a plurality of nozzles for supplying the coolant as well as the spindle 804. Two nozzle modules 700 and 400 (or 500 or 600) discharge the coolant supplied via the coolant hose 9 around a machining spot G of a workpiece W4. The machining center 800 further includes four single small nozzles 803. Each of the nozzles 803 is a tubular nozzle and has a structure capable of freely changing the angle at which the coolant is discharged. The coolant can be supplied more effectively by inserting and fixing the plate-shaped member in the tubular body of the nozzle, similarly to the single nozzle described above. In the present embodiment, the column 806 is provided with the two nozzle modules 700 and 400 (or 500 or 600) connected to the coolant hose 9 and the three single nozzles 803 in addition to the spindle 804 and the tool 802. In a different embodiment, the column 806 is provided with a proper number and proper types of nozzles which are selected from a group including the nozzle modules and/or the single nozzles. Each of the nozzle modules 700 and 400 (or 500 or 600) and the four single nozzles 803 is connected to a tank in which the coolant (for example, water or oil) is stored (not shown in the drawing). The workpiece W4 can be moved two-dimensionally in a horizontal plane by a table (not shown in the drawing).

Although some embodiments of the present invention have been described above, the embodiments are for illustrative purposes only and not intended to limit the technical scope of the present invention. It will be apparent to those skilled in the art that many other possible embodiments and various modifications of the present invention may be made in light of the specification and drawings. Although a plurality of specific terms are used herein, they are used in a generic sense only for the purpose of explanation and are not used for the purpose of limiting the invention. The embodiments and modifications fall within the scope and the spirit of the invention described in this specification and within the scope of the invention as defined in the appended claims and equivalents thereof.

## Claims

1. A nozzle (10, 303, 803) comprising an inlet (10-a) through which a fluid is supplied, an outlet (10-b) through which the fluid is discharged, and an interior space connecting the inlet and the outlet,
**characterized in that** a plate-shaped member (11, 111) having a cross section of a predetermined shape is disposed in the interior space to form a flow path of the fluid.

2. The nozzle (10, 303, 803) of claim 1, **characterized in that** the plate-shaped member (11, 111) includes a plurality of folds (11-t, 111-t) parallel to the flow of the fluid and is press-fitted to a wall surface (10-c) of the interior space of the nozzle by its own elastic force.

3. The nozzle (10, 303, 803) of claim 2, **characterized in that** the cross section of the plate-shaped member (11, 111) is uniform from the inlet (10-a) to the outlet (10-b), and
the plate-shaped member (11, 111) includes the plurality of folds (11-t, 111-t) such that its cross-sectional shape is one of a flower shape, a star shape, a triangle shape, a polygonal shape, an elliptical shape, and a gourd shape, and is press-fitted in the interior space of the nozzle (10, 303, 803) which is cylindrical.

4. The nozzle (10, 303, 803) of claim 2, **characterized in that** the cross section of the plate-shaped member (11) gradually decreases from the inlet (10-a) toward the outlet (10-b), and
the plate-shaped member (11) includes the plurality of folds (11-t) such that its cross-sectional shape is one of a flower shape, a star shape, a triangle shape, a polygonal shape, an elliptical shape, and a gourd shape, and is press-fitted in the interior space of the nozzle (10, 303, 803) in the form of a truncated cone.

5. The nozzle (10, 303, 803) of any of claims 2 to 5, **characterized in that** the plate-shaped member (11, 111) includes a slit (11-s, 111-s) and is compressed by the slit (11-s, 111-s) when it is inserted into the interior space of the nozzle (10) from the inlet (10-a) or the outlet (10-b) to generate an elastic force as a result of repulsion against the compression, and the plate-shaped member (11, 111) is press-fitted to the wall surface (10-c) of the interior space of the nozzle (10, 303, 803).

6. The nozzle (10, 303, 803) of claim 1, **characterized in that** the plate-shaped member (11, 111)forms an inner flow path (12-c, 112-c) surrounded by it and outer flow paths (12-d1∼12-d4, 112-d1∼112-d4) in the outer side of the plate-shaped member (11, 111) and between the wall surface (10-c) of the interior space of the nozzle (10, 303, 803) and the plate-shaped member (11, 111).

7. A nozzle module (400, 500, 600, 700) comprising a hollow body (401, 701) to which a fluid is supplied, and a fluid discharge part (410, 610, 710) for discharging the fluid to the outside, the fluid discharge part (410, 610, 710) being connected to the body (401, 701),
**characterized in that** one or a plurality of nozzles (620-1-620-7, 720-1-720-23) are formed in the fluid discharge part (410, 610, 710),
each of the one or the plurality of nozzles (620-1-620-7, 720-1-720-23) includes an inlet (410-a, 610-a, 710-a) through which a fluid is supplied, an outlet (410-b, 610-b, 710-b) through which the fluid is discharged, and an interior space connecting the inlet and the outlet, and
a plate-shaped member (11, 111, 611, 711) having a cross section of a predetermined shape is disposed in the interior space of the nozzle to form a flow path of the fluid.

8. The nozzle module (400, 500, 600, 700) of claim 7, **characterized in that** the plate-shaped member (11, 111, 611, 711) includes a plurality of folds (11-t, 111-t) parallel to the flow of the fluid and is press-fitted to a wall surface (410-c, 610-c, 710-c) of the interior space of the nozzle by its own elastic force.

9. The nozzle module (400, 500, 600, 700) of claim 7, **characterized in that** the cross section of the plate-shaped member (11, 111, 611, 711) is uniform from the inlet to the outlet, and
the plate-shaped member includes a plurality of folds (11-t, 111-t) such that its cross-sectional shape is one of a flower shape, a star shape, a triangle shape, a polygonal shape, an elliptical shape, and a gourd shape, and is press-fitted in the interior space of the nozzle which is cylindrical.

10. The nozzle module (400, 500, 600, 700) of claim 7, **characterized in that** the cross section of the plate-shaped member (11, 111, 611, 711) gradually decreases from the inlet toward the outlet, and
the plate-shaped member (11, 111, 611, 711) includes a plurality of folds (11-t, 111-t) such that its cross-sectional shape is one of a flower shape, a star shape, a triangle shape, a polygonal shape, an elliptical shape, and a gourd shape, and is press-fitted in the interior space of the nozzle in the form of a truncated cone.

11. The nozzle module (400, 500, 600, 700) of any of claims 7 to 10, **characterized in that** the plate-shaped member (11, 111) includes a slit (11-s, 111-s) and is compressed by the slit (11-s, 111-s) when it is inserted into the interior space of the nozzle from the inlet (410-a, 610-a, 710-a) or the outlet (410-b, 610-b, 710-b) to generate an elastic force as a result of repulsion against the compression, and the plate-shaped member (11, 111) is press-fitted to the wall surface (410-c, 610-c, 710-c) of the interior space of the nozzle.

12. The nozzle module (600) of claim 7, **characterized in that** the fluid discharge part (610) is cylindrical, the plurality of nozzles (620-1-620-7) are formed in a predetermined arrangement in the cylindrical fluid discharge part (610) so that the fluid discharge part (610) has a cross section with a plurality of small holes, and the plate-shaped member is disposed in each of the plurality of small holes.

13. The nozzle module (600) of claim 12, **characterized in that** the plurality of small holes are arranged in a V-shape.

14. The nozzle module (700) of claim 7, **characterized in that** the fluid discharge part (710) is in the form of a flat plate, the plurality of nozzles (720-1-720-23) are formed in a row in the flat plate-shaped fluid discharge part (710) so that the fluid discharge part has a cross section with a plurality of small holes, and the plate-shaped member is disposed in each of the plurality of small holes.

15. The nozzle module (400, 500, 600, 700) of claim 7, **characterized in that** the plate-shaped member (11, 111, 611, 711) disposed in each of the one or the plurality of nozzles (620-1-620-7, 720-1-720-23) forms an inner flow path (412-c, 512-c) surrounded by it and outer flow paths (412-d1∼412-d4, 512-d1∼512-d4) in the outer side of the plate-shaped member (11, 111, 611, 711) and between the wall surface (410-c, 610-c, 710-c) of the interior space of the nozzle and the plate-shaped member (11, 111).

16. A machine tool (100, 200, 300, 800) comprising a nozzle (10, 303, 803) of any one of claims 1 to 6,
**characterized in that** the machine tool (100, 200, 300, 800) allows coolant to flow into the nozzle (10, 303, 803) and discharges the coolant from the nozzle (10, 303, 803) to a tool or workpiece to cool it.

17. A machine tool (800) comprising a nozzle module (400, 500, 600, 700) of any one of claims 7 to 15,
**characterized in that** the machine tool (800) allows coolant to flow into the nozzle module (400, 500, 600, 700) and discharges the coolant from the nozzle module (400, 500, 600, 700) to a tool or workpiece to cool it.
